# EUROPEAN PATENT SPECIFICATION

(11) **EP 4 587 322 B1**
(45) Date of publication and mention of the grant of the patent: **17.06.2026**
(21) Application number: 23786125.7
(22) Date of filing: 11.09.2023
(51) Int. Cl.: B62K 21/02, B62K 25/16, B62K 21/00

(54) **ORIENTING DEVICE OF THE FRONT STEERING WHEEL OF MOTORCYCLES AND MOTORCYCLE**
VORRICHTUNG ZUM AUSRICHTEN DES VORDERRADES EINES MOTORRADES UND MOTORRAD
DISPOSITIF D'ORIENTATION DU VOLANT AVANT DE MOTOCYCLETTES ET MOTOCYCLETTE

(30) Priority: 12.09.2022 IT 202200018471
(43) Date of publication of application: 23.07.2025
(73) Proprietor: Bimota S.p.A., 47853 Coriano (RN) (IT)
(72) Inventor: MARCONI, Pierluigi, 47853 Coriano (RN) (IT); ACQUAVIVA, Andrea, 47853 Coriano (RN) (IT)
(74) Representative: Luppi, Emanuele
(86) International application number: PCT/IB2023/058997
(87) International publication number: WO 2024/057184

(56) References cited:
- EP-A1- 0 468 138
- WO-A2-2020/089226
- US-A1- 2008 236 923

## Description

### Technical Field

The present invention relates to an orienting device of the front steering wheel of motorcycles.

### Background Art

Special orienting devices of the front steering wheel connected to the handlebar of the motorcycle by means of a fork-type suspension mechanism of the front wheel are widespread on both road-use and racing motorcycles.

Specifically, the fork mechanism consists of a pair of struts, which are connected to the handlebar of the motorcycle, are arranged on opposite sides of the front wheel, support the wheel's kingpin and integrate air or spring-type shock absorbers.

Traditional fork suspension mechanisms are, however, affected by an important problem, namely, that they constrain the steering function to the suspension function, so that the action of one also irretrievably affects the other.

In this regard, it should be considered that the struts have rather different times and degrees of reaction with respect to the stresses experienced by the motorcycle, and are also marked by inefficient operation, making them unable to adequately absorb small ground roughness and progressively oppose large ground roughness.

It is easy to appreciate how undesirable interactions between the aforementioned functions are quite inconvenient in motorcycles for road use and totally unacceptable in racing motorcycles, where maximum readiness and fidelity of response to the commands given by the rider is required of the motorcycle.

Moreover, the devices in question suffer from yet another problem related to the well-known "sinking" effect under braking, which is the cause of considerable instability and low road grip by the motorcycle.

To at least partly remedy the drawbacks outlined so far, the use of orienting devices of the front wheel constructed in accordance with the teachings contained in patent IT 1172071 is known. Within that document, a device is described that substantially consists of:
- a first hub bearing the front wheel;
- a second hub, arranged within the first hub and rotatable with respect thereto;
- a steering pin within the second hub, the latter being rotatable, with respect to the steering pin, around its own axis; and
- a kingpin, which is arranged perpendicular to the steering pin and locked together with the latter, and is connected to the motorcycle frame by means of a mechanical articulated quadrilateral system that prevents it from rotating around its own axis.

In detail, the second hub is provided with a lever which projects from the first hub and articulated, with its outer end, to control means operated by the handlebar of the motorcycle.

In this regard, the orienting device in question involves the use of control means of the hydraulic type, e.g. consisting of a fluid-operated cylinder, enslaved to the handlebar of the motorcycle. However, such a system has significant drawbacks.

First of all, there is the problem of safety because the fluid-operated cylinder only works when connected to a pressurized hydraulic system.

This can be achieved either by using the motorcycle engine itself to pressurize a hydraulic circuit to which the fluid-operated cylinder is connected or by connecting the latter to an independent hydraulic circuit kept under pressure by a tank with pressurized gas.

Both solutions have drawbacks: the former requires the motorcycle engine running to steer the front wheel, while the latter requires periodic and frequent routine maintenance.

In fact, the gas contained within the respective tank must be kept at a high pressure, on the order of a few tens of atmospheres, in order to perform its task effectively, but this high pressure facilitates leakage and cannot be replenished by means of ordinary, inexpensive compressors.

It is apparent that although the tank with pressurized gas provides safe operation even when the engine is off, this safety is limited in time: this is hardly acceptable for a racing motorcycle, but totally unacceptable in a standard production motorcycle.

Yet another problem with the hydraulic system is its inertia; no matter how much high pressure is applied to the hydraulic cylinder drive fluid, it does not simultaneously transmit to the front wheel any movement imparted to the handlebar.

This inertia, which is dangerous on a road motorcycle especially in the case of sudden and abrupt maneuvers, is intolerable in a racing motorcycle where it is essential to minimize maneuvering time.

To at least partly remedy the drawbacks complained of so far, the use of additional orienting devices, made according to the teachings contained in patent EP0432107, is known.

These devices differ from their predecessors mainly in that they provide control means of the mechanical type and consist of the following rigid members:
- a fulcrum rocker arm, at its midpoint, to the frame of the motorcycle;
- a return rod connected, on the one hand, to a first end of the rocker arm and, on the other, to a point on the handlebar which is offset from the axis of rotation of the same; and
- a control rod connected, on the one hand, to a second end of the rocker arm opposite the previous one and, on the other hand, to the lever of the second hub.

The rocker arm is structured as a nearly vertical rod that is held by the frame with the ability to rotate around its own axis.

Specifically, the aforementioned rocker arm bears, at its opposite ends, two arms to which the control rod and the return rod are articulated respectively, with the ability to rotate around the rocker arm itself.

In this regard, in order to properly transmit motion from the handlebar to the front wheel, the rigid members just described are connected to the second hub, to the handlebar and to each other by means of the interposition of ball joints.

Such ball joints, in fact, allow driving in cascade rotation the various rigid members as a result of a control given by the rider on the handlebar, consequently causing the front wheel to be steered by a corresponding angle.

Providing control means of the mechanical type structured this way allows the orienting device of patent EP0432107 to achieve similar advantages of patent IT1172071 while remedying some of the drawbacks of the latter.

Since, in fact, the operation of the control means does not require the use of any pressurized fluid, the orienting device in question is marked by significantly safer use and requires significantly less frequent maintenance.

However, the orienting devices in accordance with patent EP0432107 are also, nonetheless, amenable to refinement.

In this regard, in fact, it is important to note that not even the mechanical system in question succeeds in adequately remedying the inertia that plagues the hydraulic system of patent IT1172071 since the presence of ball joints results, inevitably, in the occurrence of clearance between the various rigid members reducing the responsiveness and sensitivity to commands by means of the orienting device.

It is easy to appreciate how this, by severely affecting the precision with which the front wheel can be steered, ends up instilling in the rider unpleasant feelings of insecurity and instability which compromise, to a large extent, the quality of the riding experience and the general comfort associated therewith.

In addition to this, it should be pointed out that the mechanical control means described in EP0432107 reduce, due to their special structure, the maximum steering angle to rather limited values of the order of ± 20°.

This fact, quite undesirable in itself for any type of motorcycle, proves to be absolutely intolerable in the case of motorcycles for road use.

In this regard, in fact, it should be considered that, during the parking operations of the aforementioned motorcycles, the limited steering angle offered by the orienting device of patent EP0432107 inconveniently forces the rider to perform numerous maneuvers in order to park their motorcycle, and that the latter operation consequently requires anything but limited time frames to be completed. Document WO 2020/089226 A2 shows the preamble of claims 1 and 10.

### Description of the Invention

The main aim of the present invention is to devise an orienting device of the front steering wheel of motorcycles capable of offering greater steering angles and improved sensitivity and responsiveness to imparted commands than the prior art mentioned above.

Another object of the present invention is to devise an orienting device of the front steering wheel which allows the aforementioned drawbacks of the prior art to be overcome within the framework of a simple, rational, easy and effective to use as well as inexpensive solution.

The aforementioned objects are achieved by this orienting device of the front steering wheel having the characteristics of claim 1.

The aforementioned objects are also achieved by this motorcycle having the characteristics of claim 11.

### Brief Description of the Drawings

Other characteristics and advantages of the present invention will become more apparent from the description of a preferred, but not exclusive, embodiment of an orienting device of the front steering wheel of motorcycles, illustrated by way of an indicative, yet non-limiting example, in the accompanying tables of drawings in which:
Figure 1 is an axonometric, overall view of a preferred embodiment of the device according to the invention;
Figure 2 shown, in magnifying view, a detail from Figure 1;
Figure 3 and Figure 4 show, in a sequence of front views, two different operational configurations of the device in Figure 1;
Figure 5 is a detailed view, in front section, of the device in Figure 1;
Figure 6 is an exploded view of a detail of the device in Figure 1;
Figure 7 shows an alternative embodiment of a component of the device according to the invention.

### Embodiments of the Invention

With particular reference to these figures, reference numeral 1 globally denotes an orienting device of the front steering wheel of motorcycles.

The device 1 is intended to be mounted on a motorcycle 100, provided with a handlebar M which is rotatable around an axis of rotation Z.

It is specified, first of all, that the use of terms such as "horizontal", "vertical", "forward", "backward" and their derivatives in relation to the position of the various physical and geometrical elements covered by the invention is to be considered as referring, unless otherwise indicated, to the special configuration of straight motorcycle 100, that is, to the specific context wherein the plane of symmetry of the motorcycle 100 is substantially orthogonal to the ground and the antero-posterior direction of the same is substantially horizontal.

It is immediate to appreciate, however, how all the other information provided in relation to the aforementioned elements are independent of this context and are, therefore, also valid under the conditions of use of the device 1 wherein the plane of symmetry of the motorcycle 100 is no longer orthogonal to the ground, such as, e.g., when the motorcycle 100 copes with a curve while being bent, or wherein the anterior-posterior direction of the same is not substantially horizontal, e.g. when the motorcycle 100 wheelies or in other similar situations of use.

That being said, the orienting device 1 of the front steering wheel of motorcycles comprises, first of all:
- suspension means 2 of a front wheel A of the motorcycle 100 associated with a base frame T of the motorcycle 100 in a movable manner and provided with at least one holding pin 3 insertable, at least partly, within the front wheel A and defining at least one substantially horizontal axis of rolling R;
- at least one supporting body 4 adapted to support the front wheel A in rotation around a central axis C and comprising at least one central hub 4a housing the holding pin 3, the supporting body 4 being associated with the holding pin 3 in a rotatable manner around an axis of steering S transverse to the axis of rolling R. Conveniently, the axis of steering S can be parallel to the axis of rotation Z of the handlebar M or define therewith a non-zero angle, as will be described in more detail below.

Precisely, the axis of steering S is substantially orthogonal to the axis of rolling R.

In the present case, the axis of steering S and the axis of rolling R are substantially orthogonal and incident to each other.

Again, the axis of steering S is misaligned with respect to the axis of rotation Z.

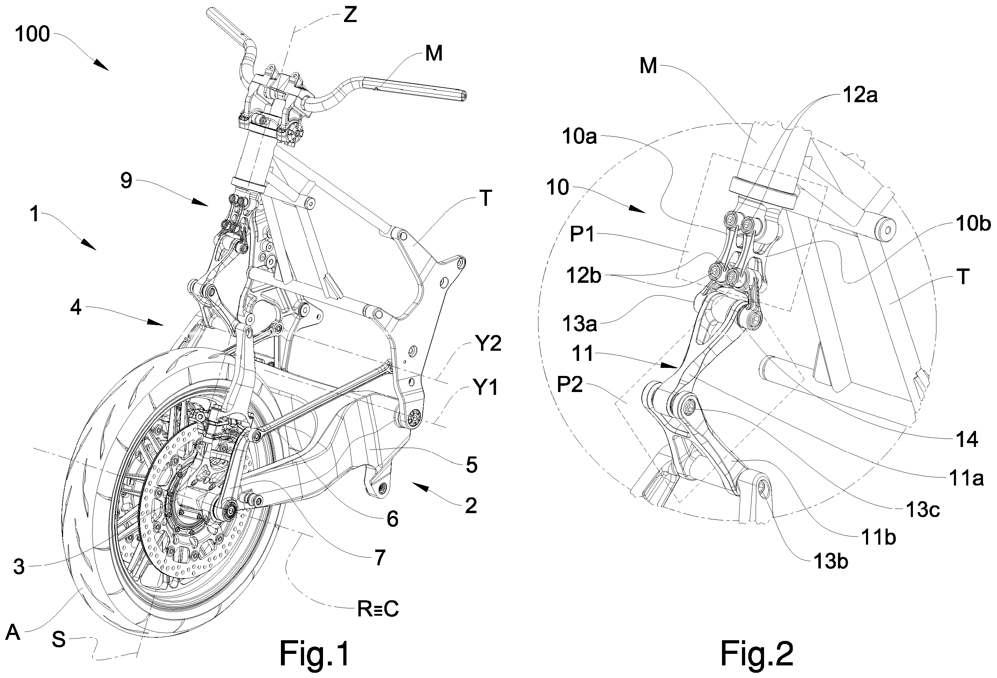

More specifically, as visible in Figure 1, the axis of steering S is arranged in a backward position (i.e., closer to the position usually occupied by the user on the motorcycle 100) than the axis of rotation Z and this distance can be defined at will.

As will be seen below, the axis of steering S can have the same angle of incidence, i.e., the angle defined with respect to the ground, as the axis of rotation Z (in the case of using the dual primary lever system) or have a different angle of incidence with respect to the axis of rotation Z (in the case of using the single primary lever system).

With regard to the suspension means 2, they are adapted to absorb the stresses due to road irregularities such as potholes, bumps and ups and downs and thus to limit the transmission of the latter to the user of the motorcycle 100.

Specifically, the suspension means 2 comprise at least one suspension mechanism 5, 6, 7 of the articulated quadrilateral type associated with the holding pin 3 and in turn comprising:
- at least one first crank element 5 hinged to the holding pin 3 and to the base frame T and rotatable with respect to the base frame T around at least one first axis of suspension Y1;
- at least one second crank element 6 hinged to the base frame T and rotatable with respect to the base frame T around at least one second axis of suspension Y2 substantially parallel to the first axis of suspension Y1; and
- at least one connecting rod element 7 arranged substantially parallel to the axis of steering S, locked together with the holding pin 3 and hinged to the second crank element 6.

In actual facts, the first crank element 5 and the second crank element 6 are hinged, at one end, to the base frame T and, at the other end, to the holding pin 3 and to the connecting rod element 7, respectively.

Specifically, the first crank element 5 is freely rotatable with respect to the holding pin 3, while the connecting rod element 7 is constrained to the same in an integral manner, e.g. by means of a grooved coupling.

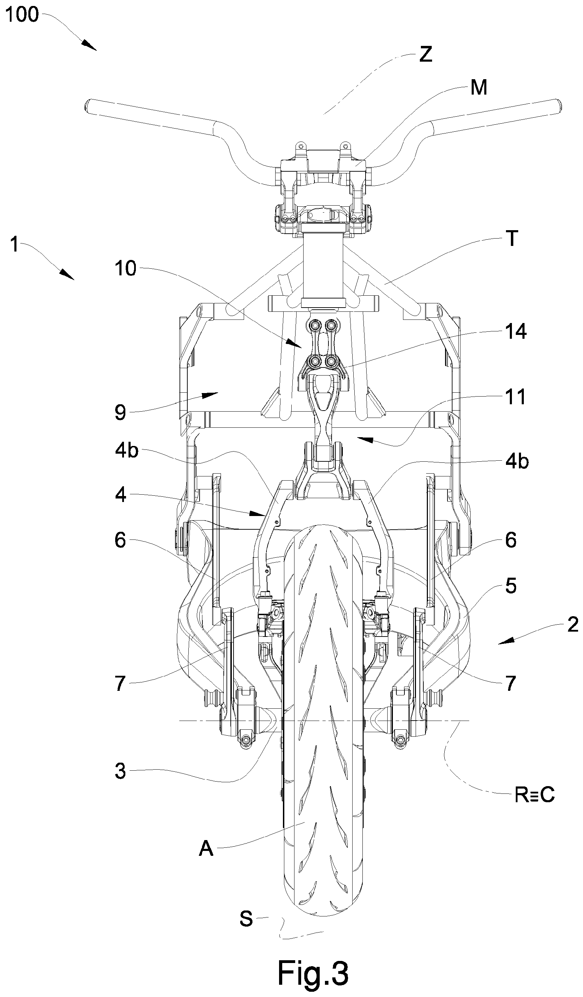

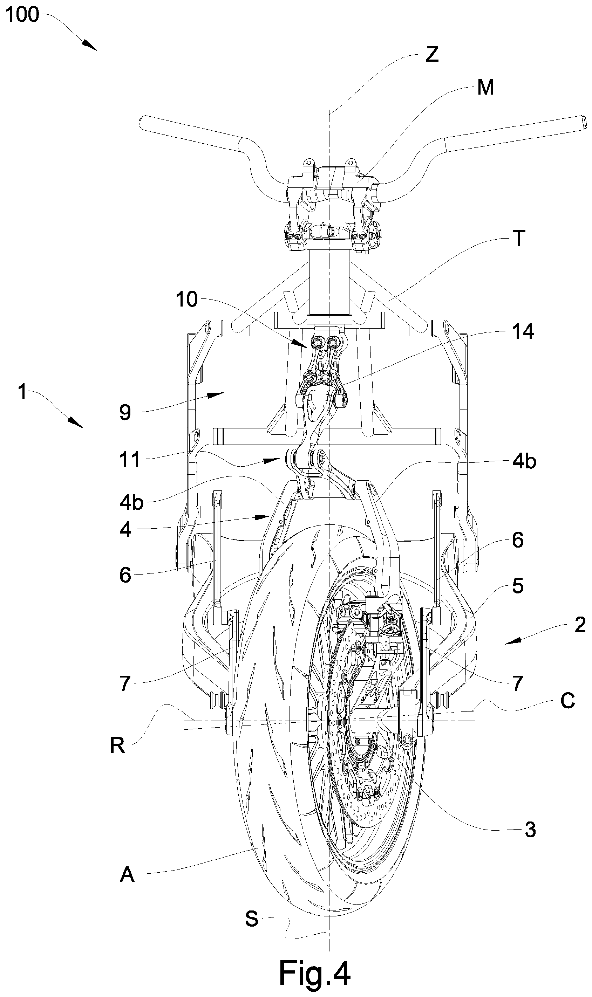

As far as conformation is concerned, the first crank element 5 is preferably shaped as a two-arm fork, the front wheel A being positioned between the two arms (see Figures 3 and 4 in this regard). In this case, the first crank element 5 is hinged to the base frame T at each of its two arms.

In addition, again in this case, the suspension mechanism 5, 6, 7 comprises two second crank elements 6 and two connecting rod elements 7 arranged on opposite sides of the front wheel A. The two second crank elements 6 are hinged to the base frame T and to the respective connecting rod elements 7.

That being said, however, different embodiment solutions to the preferred one just outlined cannot be ruled out.

For example, it cannot be ruled out that the first crank element 5 consists of a single-arm fork and that the latter, therefore, holds the holding pin 3 cantilevered.

Thus, in this case, the suspension mechanism 5, 6, 7 comprises a single first crank element 5, a single second crank element 6 and a single connecting rod element 7.

In all cases, the suspension mechanism 5, 6, 7 just described allows the holding pin 3 to be moved with respect to the base frame T along an arc of circumference having a center coincident with the fulcrum axis of the first crank element 5 on the base frame itself.

In this regard, it is important to point out that the conformation of the suspension mechanism 5, 6, 7 and, in particular, the various lengths of its component members allow for the movement of the holding pin 3 along an arc of circumference having curvature such that it can be, in fact, assimilated to a substantially straight trajectory.

This substantial equivalence is corroborated by the fact that the entity of rotation carried out by the crank elements 5, 6 with respect to the base frame T is often of a rather limited order and, therefore, difficult to distinguish from a straight trajectory.

As will be more fully dealt with later in this disclosure, this peculiar circumstance causes the inclination of the axis of steering S with respect to the ground to remain substantially constant even in rough terrain and, therefore, even as a result of rotations of the crank elements 5, 6 around their respective axes of suspension Y1, Y2.

In this way, it is possible to ensure perfect steerability of the front wheel A and high riding comfort regardless of the degree of ground roughness.

Moreover, by appropriately positioning the points which define the axes of suspension Y1, Y2, it is possible to obtain variations in the angle of incidence of the axis of steering S depending on the suspension stroke.

Concerning the supporting body 4, it is specified that the central hub 4a is substantially shaped as a hollow straight cylinder and is inserted into the front wheel A.

In addition, the supporting body 4 is provided with at least two end portions 4b, which are associated with the ends (i.e., with the faces of the aforementioned straight cylinder) of the central hub 4a and coming out from the sides of the front wheel A. Conveniently, the end portions 4b hold the front brake calipers.

Precisely, the central hub 4a houses the holding pin 3 within it.

Specifically, the end portions 4b are constrained to the central hub 4a in a fixed manner, so that there is no degree of freedom between them and these can, therefore, move locked together around the axis of steering S only.

The end portions 4b also hold the braking force of the front brake calipers.

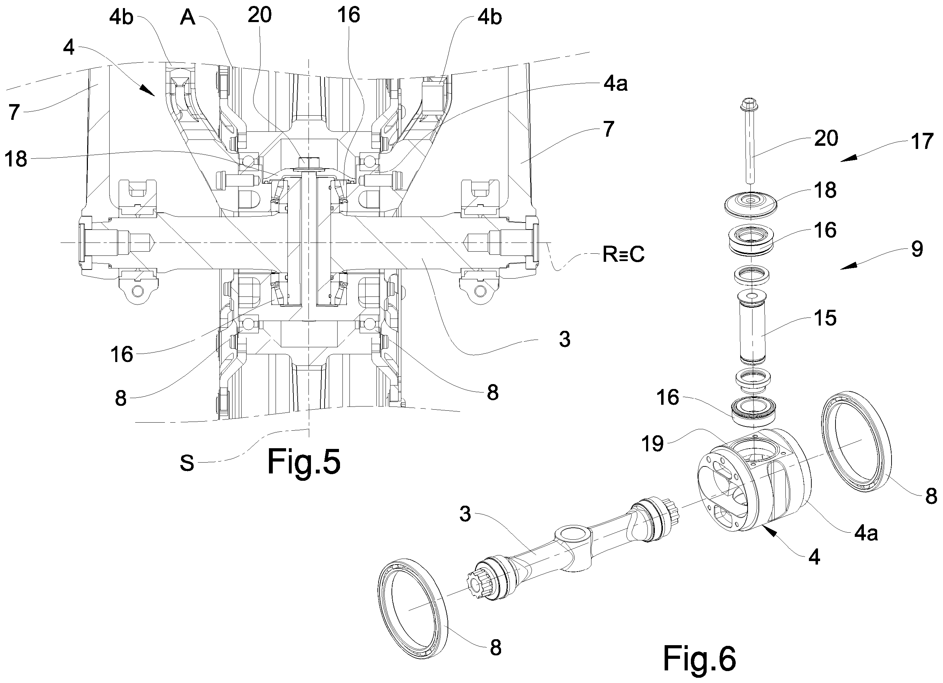

As visible in Figure 5, the end portions 4b are screwed onto the central hub 4a.

Again, the end portions 4b extend from the central hub 4a along an inclined direction substantially parallel to the axis of steering S.

Conveniently, the device 1 comprises friction-reducing means 8 located between the supporting body 4 and the rim of the front wheel A and adapted to promote the rotation of the front wheel A around the central axis C.

More precisely, the friction-reducing means 8 are located between the central hub 4a and the rim of the front wheel A.

Specifically, the friction-reducing means 8 comprise at least one friction-reducing element 8 of the type of a rolling bearing, e.g., ball bearing (Figures 5 and 6).

Preferably, the friction-reducing means 8 comprise two friction-reducing elements 8 positioned symmetrically with respect to the axis of steering S.

In detail, the two friction-reducing elements 8 are positioned such that they have a geometric center (i.e., the center of the bearing rings) intersecting the central axis C.

In addition, the device 1 comprises at least one steering unit 9, connected to the supporting body 4 and to the handlebar M, which is adapted to enable the rotation of the supporting body 4 around the axis of steering S and comprising a plurality of levers 10, 11 connected to each other in a kinematic manner.

Specifically, the levers 10, 11 are connected, on one side, to the handlebar M and, on the other side, to the end portions 4b of the supporting body 4.

According to the invention, the steering unit 9 comprises a plurality of connecting cylindrical joints 12, 13, the levers 10, 11 being connected to the supporting body 4, to the handlebar M and to each other by means of the interposition of the cylindrical joints 12, 13, in particular only cylindrical joints 12, 13, i.e., without the use of other types of joints, e.g. ball joints.

This fact alone proves extremely advantageous in greatly increasing the responsiveness and sensitivity to the commands offered by the device 1, remedying the relevant drawbacks of the prior art complained of earlier.

In fact, the use of cylindrical joints 12, 13 significantly reduces the clearance between one lever 10, 11 and the other, ensuring that each rotation, however small, of the handlebar M around the axis of rotation Z corresponds to an immediate and similar rotation of the front wheel A around the axis of steering S.

Going into details, with particular reference to Figure 2, the levers 10, 11 are divided into:
- a first group 10, lying on a first plane of lying P1, which is provided with primary levers 10a, 10b, 10c to which primary cylindrical joints 12 are connected having axes substantially parallel to each other and orthogonal to the central axis C and to the axis of rotation Z; and
- a second group 11, connected to the first group 10 and lying on a second plane of lying P2 transverse to the first plane of lying P1, which is provided with secondary levers 11a, 11b to which secondary cylindrical joints 13 are connected having axes substantially parallel to the central axis C.

In particular, the planes of lying P1, P2 are substantially orthogonal to each other.

In addition, the axes of the primary cylindrical joints 12 are transverse to the first plane of lying P1.

More specifically, the axes of the primary cylindrical joints 12 are substantially orthogonal to the first plane of lying P1.

Again, the axes of the secondary cylindrical joints 13 are transverse to the second plane of lying P2.

More precisely, the axes of the secondary cylindrical joints 13 are substantially orthogonal to the second plane of lying P2.

As for the first plane of lying P1, it is locked in rotation together with the axis of rotation Z and, in the particular configuration of straight motorcycle 100, is defined by the axis of rotation Z and by a direction which is orthogonal to the plane of symmetry of the motorcycle 100.

Instead, the second plane of lying P2 conveniently coincides with the centerline plane of the front wheel A and is locked together with the rotation of the latter and of its centerline plane around the axis of steering S.

It is important to note from the beginning that the two planes of lying P1, P2 can rotate around two axes (i.e., the axis of rotation Z for the first plane of lying P1 and the axis of steering S for the second plane of lying P2) which are parallel and misaligned with each other.

In addition to this, it is also relevant to consider that the steering means 9 allow the rotation of only the supporting body 4 (and, therefore, of the front wheel A) around the axis of steering S.

This means that the steering means 9 do not operate the holding pin 3 in any way.

It follows that the central axis C is superimposed on and coincident with the axis of rolling R in a reference configuration, shown in Figure 3, wherein the centerline plane of the front wheel A is substantially superimposed on the plane of symmetry of the motorcycle (the so-called straight front wheel A configuration), and that it is found to be progressively inclined with respect to the latter as the front wheel A is rotated around the axis of steering S (as visible in Figure 4, where the maximum steering configuration of the front wheel A is shown).

According to the invention, one of either the first group 10 or the second group 11 is connected to the handlebar M and the other of either the first group 10 or the second group 11 is connected to the supporting body 4.

In accordance with the preferred embodiment shown in the figures, the first group 10 is connected to the handlebar M and the second group 11 is connected to the supporting body 4.

However, the opposite possibility, i.e., the one wherein the first group 10 is connected to the supporting body 4 and the second group 11 is connected to the handlebar M cannot be ruled out. Going into detail, in accordance with a first embodiment shown in Figures 1 to 6, the first group 10 is of the type of an articulated parallelogram mechanism and comprises at least two primary levers 10a, 10b parallel side by side to each other.

Specifically, the first group 10 comprises a first primary lever 10a and a second primary lever 10b connected, at one end, to the handlebar M by means of a first primary cylindrical joint 12a and, at the other end, to the second group 11 by means of a second primary cylindrical joint 12b.

It follows that the device 1 in accordance with this first embodiment comprises four primary cylindrical joints 12, including two first primary cylindrical joints 12a (one connected between the first primary lever 10a and the handlebar M and the other connected between the second primary lever 10b and the handlebar M) and two second primary cylindrical joints 12b (one connected between the first primary lever 10a and the second group 11 and the other connected between the second primary lever 10b and the second group 11).

More precisely, as seen in detail in Figure 2, the second primary cylindrical joints 12b are connected to kinematic linkage means 14 with the second group 11 positioned between the two groups 10, 11.

In the present case, the kinematic linkage means 14 consist of one or more rigid elements adapted to transfer the motion generated by the rotation of the handlebar M around the axis of rotation Z from the first group 10 to the second group 11 and to set, by virtue of this, the second group 11 and the relevant second plane of lying P2 in rotation around the axis of steering S.

Taking into consideration the fact that the first group 10 is of the type of an articulated parallelogram mechanism, it is possible to state that:
- the two primary levers 10a, 10b consist of the two cranks of the articulated parallelogram and are, therefore, rotatable with respect to the handlebar M around the respective first primary cylindrical joints 12a;
- the segment defined by the ends of the primary levers 10a, 10b connected to the handlebar M and, by extension, the handlebar itself consist of the frame of the articulated parallelogram with respect to which the two primary levers 10a, 10b rotate; and that
- the segment defined by the ends of the primary levers 10a, 10b connected to the kinematic linkage means 14 and, by extension, the kinematic linkage means themselves consist of the connecting rod of the articulated parallelogram, the latter being shiftable along a direction parallel to the central axis C due to the rotation of the primary levers 10a, 10b around their respective first primary cylindrical joints 12a.

In actual facts, the ends of the primary levers 10a, 10b connected to the handlebar M are constrained to the latter locked in rotation around the axis of rotation Z while the opposite ends, that is, those connected to the kinematic linkage means 14, are rotatable around the aforementioned axis and free, in addition, to shift along a direction substantially parallel to the central axis C (compare Figures 3 and 4).

In other words, the rotation of the handlebar M around the axis of rotation Z causes the primary levers 10a, 10b, in addition to rotating locked together with the handlebar M around that axis, to also be set in rotation around the first primary cylindrical joints 12a thus resulting in the shift of the ends connected to the kinematic linkage means 14.

So, due to the peculiar properties of the articulated parallelograms, the two groups 10, 11 are able to transmit motion from the handlebar M to the front wheel A while lying on planes of lying P1, P2 rotating around misaligned axes.

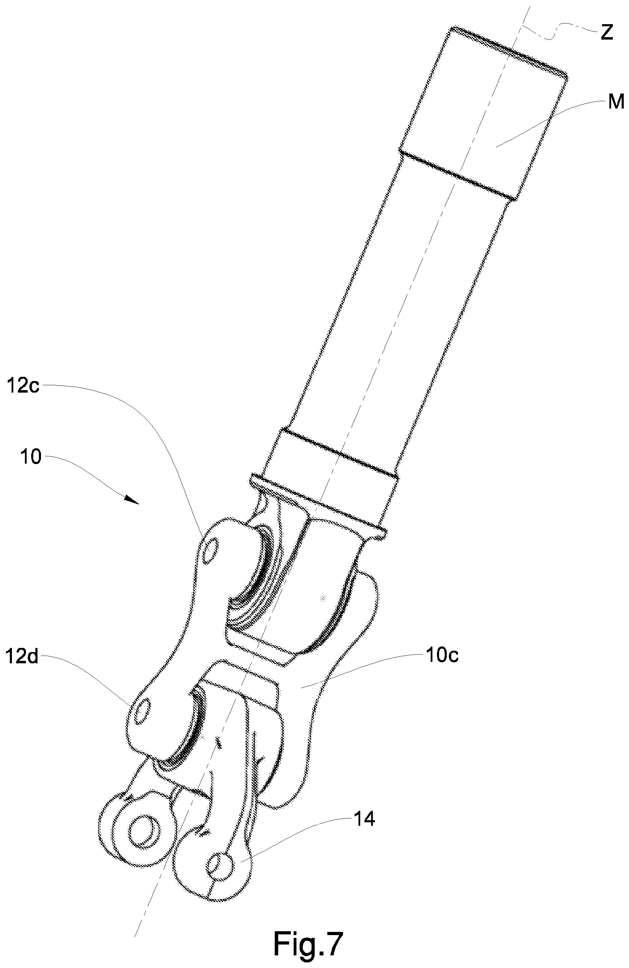

Alternatively, in accordance with a second embodiment shown in Figure 7, the first group 10 comprises a single primary lever 10c.

In this case, the first group comprises a third primary lever 10c connected, at one end, to the handlebar M by means of a third primary cylindrical joint 12c and, at the other end, to the second group 11 by means of a fourth primary cylindrical joint 12d.

It follows that the device 1 in accordance with this second embodiment comprises two primary cylindrical joints 12, of which a third primary cylindrical joint 12c (connected between the third primary lever 10c and the handlebar M) and a fourth primary cylindrical joint 12d (connected between the third primary lever 10c and the second group 11).

More precisely, the fourth primary cylindrical joint 12d is connected, exactly as in the first embodiment described above, to the kinematic linkage means 14.

As anticipated earlier, providing a first group 10 comprising a single primary lever 10 allows the angle of incidence between the axis of steering S and the axis of rotation Z to be varied, thus adding a degree of freedom to the device 1 and increasing even more the versatility of use of the motorcycle 100 compared to the mentioned state of the art.

As for the second group 11, however, it is advantageously of the type of a knee mechanism and comprises at least two secondary levers 11a, 11b hinged to each other and provided with free ends which move close to/away from each other.

Specifically, out of the secondary levers 11a, 11b:
- a first secondary lever 11a is connected to the kinematic linkage means 14 by means of a first secondary cylindrical joint 13a; and
- a second secondary lever 11b is connected to the supporting body 4 by means of a second secondary cylindrical joint 13b.

Specifically, the second secondary lever 11b is connected to the end portions 4b of the supporting body 4.

In addition, the two secondary levers 11a, 11b are arranged incident to each other and mutually connected by means of a third secondary cylindrical joint 13c.

In other words, the two levers 11a, 11b can rotate, by moving their free ends (i.e., those connected, for the first secondary lever 11a, to the kinematic linkage means 14 and, for the second secondary lever 11b, to the supporting body 4) closer or farther apart, around the third secondary cylindrical joint 13c.

From what has been described so far, it follows that the kinematic linkage means 14 allow the two groups 10, 11 to be kinematically connected thanks to the interposition of the second primary cylindrical joint 12b or of the fourth primary cylindrical joint 12d to the first secondary cylindrical joint 13a.

It is also easy to appreciate that, at uneven paths, the free ends of the secondary levers 11a, 11b can freely move close to and away from each other, by varying, as a consequence of such movement, the distance running between the handlebar M and the front wheel A.

In actual facts, the second group 11 allows following the roughness of the terrain by opening/closing, i.e., by moving the free ends of the secondary levers 11a, 11b away from/close to each other, depending on the particular conformation of the soil.

It is clear how, in this way, the second group 11 is able to respond readily and effectively to the aforementioned roughness, resulting in a particularly comfortable riding experience on both smooth terrain and rough distances.

Having described the groups 10, 11, it is appropriate to dwell on the fact that the structural and operational peculiarities enunciated so far make it possible to achieve considerable advantages, remedying the aforementioned drawbacks of the state of the art.

First, such groups 10, 11 allow the front wheel A to be rotated around the axis of steering S in an absolutely immediate and, at the same time, precise manner.

This evidently makes it possible to instill in the user feelings of safety and stability that benefit the overall ride quality in the case of both road-use and sport-type motorcycles.

Not only that, but the structure of the groups 10, 11 allows the maximum steering angle (i.e., the maximum angle that the front wheel A can make, in one direction or the other, around the axis of steering S starting from the reference configuration) to be greatly increased compared to the devices mentioned in the state of the art.

In this regard, the device 1 allows the front wheel to be rotated around the axis of steering S by an angle of about 35° in either direction, leading, therefore, to a substantial duplication of this value compared with what is offered by known devices.

It is clear how this fact, in itself quite desirable for any type of motorcycle, proves to be absolutely advantageous in the case of motorcycles for road use, especially when parking them.

In this regard, in fact, consider how a greater steering angle makes it possible to reduce the number of maneuvers that the user has to make to park the motorcycle 100, consequently lowering the time required to carry out this operation.

That said, as shown in Figure 5 and Figure 6, the steering unit 9 comprises:
- at least one steering pin 15, fitted at least partly into the central hub 4a and transversely associated with the holding pin 3, defining the axis of steering S;
- at least one bearing 16 mounted coaxially around the steering pin 15 and arranged in contact with the central hub 4a around the perimeter thereof; and
- offsetting means 17 of the clearances present between the steering pin 15 and the bearing 16 associated with at least one of either the steering pin 15 or the bearing 16.

Specifically, the steering unit 9 comprises two bearings 16 mounted on opposite sides on the steering pin 15 with respect to the holding pin 3.

It is understood that the considerations set forth in this disclosure with regard to only one of the bearings 16 (e.g., referring to the latter in the singular) are to be regarded as equally valid for the other bearing 16 and that, regardless of their number, the latter are completely identical to each other both functionally and structurally.

Specifically, the bearing 16 is of the conical type; thus, it can promote the rotation of the front wheel A around the axis of steering S as a result of the rotation of the handlebar M around the axis of rotation Z imparted by the user.

As for the steering pin 15, it is preferably inserted by interference within the holding pin 3.

This coupling method makes it possible to avert the presence of any clearance between the two components and, therefore, to ensure that the front wheel A can be steered around the axis of steering S in a precise, repeatable and absolutely effective manner.

Bearing this in mind, it is, at this point, easy to appreciate how the substantially rectilinear movement of the holding pin 3 ensured by the suspension means 2 makes it possible to maintain a constant inclination with respect to the ground of the axis of steering S, which is to the benefit of the steerability of the front wheel A on both smooth and uneven terrain.

Again, the steering pin 15 is preferably made as a single body piece (as shown in Figure 5 and Figure 6), but the possibility cannot be ruled out that it may be composed of a pair of pins of shorter length inserted, from opposite sides, on the holding pin 3 and each provided with a respective bearing 16 mounted coaxially thereto.

Going into detail, the offsetting means 17 comprise:
- at least one elastically compressible element 18 which is arranged to rest on a respective resting surface 19 of the central hub 4a located at one end of the steering pin 15 and is adapted to impart, due to its own compression, at least one force of mutual approach to the steering pin 15 and to the bearing 16; and
- at least one adjusting element 20 for adjusting the compression of the elastically compressible element 18.

The resting surface 19 preferably has a flattened conformation; in this way, it can stably support the elastically compressible element 18 (see Figure 6 in this regard).

Again, the resting surface 19 has a substantially rectangular shape.

In this regard, the resting surface 19 is crossed by the axis of steering S at its geometric center (i.e., the center of the aforementioned rectangle).

Preferably, the elastically compressible element 18 is of the type of a disc spring.

Again, the elastically compressible element 18 is arranged on the resting surface 19 in such a way that it, too, is crossed by the axis of steering S at its geometric center.

In detail, the elastically compressible element 18 has a range of 0.5 mm to 2.5 mm, better of 1.0 mm to 2.0 mm, preferably equal to 1.5 mm.

In this regard, it is specified that the term "excursion" is intended to mean the maximum distance along the axis of steering S that the elastically compressible element 18 is able to travel while remaining in the elastic field.

As can be seen in Figure 5, the special design of the elastically compressible element 18 allows the bearing 16 and the steering pin 15 to be pushed in close proximity to each other, offsetting for any clearance present between the two.

Specifically, the compression of the elastically compressible element 18 causes both transverse clearances (i.e., those present along the axis of steering S) and circumferential clearances (i.e., those present perpendicular to the axis of steering S) between the bearing 16 and the steering pin 15 to be substantially zeroed, thus preventing any relevant movement between them.

It is easy to appreciate how this expedient benefits the efficiency with which the front wheel A is rotated around the axis of steering S, thus increasing, within an absolutely intuitive and easily achievable technical solution, the precision of use and the overall reliability offered to the user by the device 1.

As far as the adjusting element 20 is concerned, it has elongated conformation and is inserted within the bearing 16 and the steering pin 15.

Specifically, the adjusting element 20 has substantially straight-cylinder conformation and is arranged within the aforementioned components coaxially, i.e., also aligned with the axis of steering S (Figure 6).

Even more specifically, the adjusting element 20 is of the type of a preload screw and is, therefore, coupled to the steering pin 15 in a threaded manner.

In this way, the adjusting element 20 can be adjusted up/down along the axis of steering S to reduce/increase the compression of the elastically compressible element 18 and vary, by doing so, the mutual approaching force exerted by the latter on the steering pin 15 and on the bearing 16.

It is automatic to appreciate how an adjusting element 20 of this type makes it possible to adjust the compression of the elastically compressible element 18 in an easy manner and, at the same time, absolutely quickly, cutting down maintenance and adjustment times.

All this being said, according to a further aspect of the invention, the present invention also relates to a motorcycle 100 provided with the device 1 described so far.

In this case, the motorcycle 100 comprises:
- at least one base frame T;
- at least one front wheel A and at least one rear wheel associated with the base frame T;
- at least one handlebar M rotatable around at least one axis of rotation Z and employable by a user for steering the front wheel A;
- at least one device 1 operatively associated with the front wheel A and with the handlebar M.

Bearing in mind the considerations made so far regarding the device 1, it is possible to state that such a motorcycle 100 not only allows the front wheel A to be steered at far greater angles (even as high as 35°) than conventional motorcycles, but also offers, in comparison with the latter, improved sensitivity and responsiveness to commands imparted by the user.

It has in practice been ascertained that the described invention achieves the intended objects.

In particular, the fact is emphasized that the special expedient of providing cylindrical joints to connect the levers substantially abates the clearance between the levers themselves, thus significantly increasing the responsiveness and sensitivity to the commands by the orienting device compared with the prior art mentioned above.

Finally, it is shown that the special construction of the steering unit allows front wheel steering angles with a significantly higher value than known steering devices.

This expedient proves quite useful in a multiplicity of different conditions, such as, e.g., in the case of parking a motorcycle, in which circumstance the greater steering angle results in a significant reduction in the number of maneuvers required and, therefore, in the timing associated with such an operation.

## Claims

1. Orienting device (1) of the front steering wheel of motorcycles, comprising:
- suspension means (2) of a front wheel (A) of a motorcycle (100) associated with a base frame (T) of said motorcycle (100) in a movable manner and provided with at least one holding pin (3) insertable, at least partly, within said front wheel (A) and defining at least one substantially horizontal axis of rolling (R);
- at least one supporting body (4) adapted to support said front wheel (A) in rotation around a central axis (C) and comprising at least one central hub (4a) housing said holding pin (3), said supporting body (4) being associated with said holding pin (3) in a rotatable manner around an axis of steering (S) transverse to said axis of rolling (R);
- at least one steering unit (9), connected to said supporting body (4) and to a handlebar (M) of said motorcycle (100), said steering unit (9) being adapted to enable the rotation of said supporting body (4) around said axis of steering (S) and comprising a plurality of levers (10, 11) connected to each other in a kinematic manner;
wherein said steering unit (9) comprises a plurality of connecting cylindrical joints (12, 13), said levers (10, 11) being connected to said supporting body (4), to said handlebar (M) and to each other by interposition of said cylindrical joints (12, 13);
**characterized by** the fact that said levers (10, 11) are divided into:
- a first group (10), lying on a first plane of lying (P1), which is provided with primary levers (10a, 10b, 10c) to which primary cylindrical joints (12) are connected having axes substantially parallel to each other and orthogonal to said central axis (C) and to an axis of rotation (Z) of said handlebar (M); and
- a second group (11), connected to said first group (10) and lying on a second plane of lying (P2) transverse to said first plane of lying (P1), which is provided with secondary levers (11a, 11b) to which secondary cylindrical joints (13) are connected having axes substantially parallel to said central axis (C);
wherein one of either said first group (10) or said second group (11) is connected to 30 said handlebar (M) and the other of either said first group (10) or said second group (11) is connected to said supporting body (4).

2. Device (1) according to claim 1, **characterized by** the fact that said first group (10) is connected to said handlebar (M) and said second group (11) is connected to said supporting body (4).

3. Device (1) according to claim 1 or 2, **characterized by** the fact that said first group (10) is of the type of an articulated parallelogram mechanism and comprises at least two of said primary levers (10a, 10b) parallel side by side to each other.

4. Device (1) according to claim 1 or 2, **characterized by** the fact that said first group (10) comprises a single said primary lever (10c).

5. Device (1) according to one or more of the preceding claims, **characterized by** the fact that said second group (11) is of the type of a knee mechanism and comprises at least two of said secondary levers (11a, 11b) hinged to each other and provided with free ends which move close to/away from each other.

6. Device (1) according to one or more of the preceding claims, **characterized by** the fact that said steering unit (9) comprises:
- at least one steering pin (15), fitted at least partly into said central hub (4a) and transversely associated with said holding pin (3), defining said axis of steering (S);
- at least one bearing (16) mounted coaxially around said steering pin (15) and arranged in contact with said central hub (4a) around the perimeter thereof; and
- offsetting means (17) of the clearances present between said steering pin (15) and said bearing (16) associated with at least one of either said steering pin (15) or said bearing (16).

7. Device (1) according to claim 6, **characterized by** the fact that said offsetting means (17) comprise:
- at least one elastically compressible element (18) which is arranged to rest on a respective resting surface (19) of said central hub (4a) located at one end of said steering pin (15) and is adapted to impart, due to its own compression, at least one force of mutual approach to said steering pin (15) and to said bearing (16); and
- at least one adjusting element (20) for adjusting the compression of said elastically compressible element (18).

8. Device (1) according to claim 7, **characterized by** the fact that said elastically compressible element (18) is of the type of a disc spring.

9. Device (1) according to one or more of the preceding claims, **characterized by** the fact that said suspension means (2) comprise at least one suspension mechanism (5, 6, 7) of the articulated quadrilateral type associated with said holding pin (3) and in turn comprising:
- at least one first crank element (5) hinged to said holding pin (3) and to said base frame (T) and rotatable with respect to said base frame (T) around at least one first axis of suspension (Y1);
- at least one second crank element (6) hinged to said base frame (T) and rotatable with respect to said base frame (T) around at least one second axis of suspension (Y2) substantially parallel to said first axis of suspension (Y1); and
- at least one connecting rod element (7) arranged substantially parallel to said axle of steering (S), locked together with said holding pin (3) and hinged to said second crank element (6).

10. Motorcycle (100), comprising:
- at least one base frame (T);
- at least one front wheel (A) and at least one rear wheel associated with said base frame (T);
- at least one handlebar (M) rotatable around at least one axis of rotation (Z) and employable by a user for steering said front wheel (A);
- at least one orienting device (1) operatively associated with said front wheel (A) and with said handlebar (M),
wherein said orienting device (1) comprises:
- suspension means (2) of said front wheel (A) of said motorcycle (100) associated with said base frame (T) of said motorcycle (100) in a movable manner and provided with at least one holding pin (3) insertable, at least partly, within said front wheel (A) and defining at least one substantially horizontal axis of rolling (R);
- at least one supporting body (4) adapted to support said front wheel (A) in rotation around a central axis (C) and comprising at least one central hub (4a) housing said holding pin (3), said supporting body (4) being associated with said holding pin (3) in a rotatable manner around an axis of steering (S) transverse to said axis of rolling (R);
- at least one steering unit (9), connected to said supporting body (4) and to a handlebar (M) of said motorcycle (100), said steering unit (9) being adapted to enable the rotation of said supporting body (4) around said axis of steering (S) and comprising a plurality of levers (10, 11) connected to each other in a kinematic manner;
wherein said steering unit (9) comprises a plurality of connecting cylindrical joints (12, 13), said levers (10, 11) being connected to said supporting body (4), to said handlebar (M) and to each other by interposition of said cylindrical joints (12, 13);
**characterized by** the fact that said levers (10, 11) are divided into:
- a first group (10), lying on a first plane of lying (P1), which is provided with primary levers (10a, 10b, 10c) to which primary cylindrical joints (12) are connected having axes substantially parallel to each other and orthogonal to said central axis (C) and to an axis of rotation (Z) of said handlebar (M); and
- a second group (11), connected to said first group (10) and lying on a second plane of lying (P2) transverse to said first plane of lying (P1), which is provided with secondary levers (11a, 11b) to which secondary cylindrical joints (13) are connected having axes substantially parallel to said central axis (C);
wherein one of either said first group (10) or said second group (11) is connected to said handlebar (M) and the other of either said first group (10) or said second group (11) is connected to said supporting body (4).

11. Motorcycle (100) according to claim 10, **characterized by** the fact that said first group (10) is of the type of an articulated parallelogram mechanism and comprises at least two of said primary levers (10a, 10b) parallel side by side to each other.

12. Motorcycle (100) according to one or more of the preceding claims from 10 to 11, **characterized by** the fact that that said second group (11) is of the type of a knee mechanism and comprises at least two of said secondary levers (11a, 11b) hinged to each other and provided with free ends which move close to/away from each other.

13. Motorcycle (100) according to one or more of the preceding claims from 10 to 12, **characterized by** the fact that said steering unit (9) comprises:
- at least one steering pin (15), fitted at least partly into said central hub (4a) and transversely associated with said holding pin (3), defining said axis of steering (S);
- at least one bearing (16) mounted coaxially around said steering pin (15) and arranged in contact with said central hub (4a) around the perimeter thereof; and
- offsetting means (17) of the clearances present between said steering pin (15) and said bearing (16) associated with at least one of either said steering pin (15) or said bearing (16).

14. Motorcycle (100) according to claim 13, **characterized by** the fact that said offsetting means (17) comprise:
- at least one elastically compressible element (18) which is arranged to rest on a respective resting surface (19) of said central hub (4a) located at one end of said steering pin (15) and is adapted to impart, due to its own compression, at least one force of mutual approach to said steering pin (15) and to said bearing (16); and
- at least one adjusting element (20) for adjusting the compression of said elastically compressible element (18).

15. Motorcycle (100) (1) according to one or more of the preceding claims from 10 to 14, **characterized by** the fact that said suspension means (2) comprise at least one suspension mechanism (5, 6, 7) of the articulated quadrilateral type associated with said holding pin (3) and in turn comprising:
- at least one first crank element (5) hinged to said holding pin (3) and to said base frame (T) and rotatable with respect to said base frame (T) around at least one first axis of suspension (Y1);
- at least one second crank element (6) hinged to said base frame (T) and rotatable with respect to said base frame (T) around at least one second axis of suspension (Y2) substantially parallel to said first axis of suspension (Y1); and
- at least one connecting rod element (7) arranged substantially parallel to said axle of steering (S), locked together with said holding pin (3) and hinged to said second crank element (6).

## Patentansprüche

1. Ausrichtvorrichtung (1) des lenkbaren Vorderrades von Motorrädern, umfassend:
- Aufhängungsmittel (2) eines Vorderrads (A) eines Motorrads (100), das beweglich mit einem Grundrahmen (T) des Motorrads (100) verbunden und mit mindestens einem Haltestift (3) versehen ist, der zumindest teilweise in das Vorderrad (A) einführbar ist und mindestens eine im Wesentlichen horizontale Rollachse (R) definiert;
- mindestens einen Stützkörper (4), der dazu ausgebildet ist, das Vorderrad (A) um eine zentrale Achse (C) drehbar zu lagern, und der mindestens eine zentrale Nabe (4a) umfasst, die den Haltestift (3) aufnimmt, wobei der Stützkörper (4) mit dem Haltestift (3) drehbar um eine Lenkachse (S) quer zur Rollachse (R) verbunden ist;
- mindestens eine Lenkeinheit (9), die mit dem Stützkörper (4) und einer Lenkstange (M) des Motorrads (100) verbunden ist, wobei die Lenkeinheit (9) dazu ausgebildet ist, die Drehung des Stützkörpers (4) um die Lenkachse (S) zu ermöglichen, und eine Mehrzahl von Hebeln (10, 11) umfasst, die auf kinematische Weise miteinander verbunden sind;
wobei die Lenkeinheit (9) eine Mehrzahl von verbindenden zylindrischen Gelenken (12, 13) umfasst, wobei die Hebel (10, 11) mit dem Stützkörper (4), mit der Lenkstange (M) und miteinander durch Zwischenschaltung der zylindrischen Gelenke (12, 13) verbunden sind;
**dadurch gekennzeichnet, dass** die Hebel (10, 11) unterteilt sind in:
- eine erste Gruppe (10), die auf einer ersten Liegeebene (P1) liegt und mit primären Hebeln (10a, 10b, 10c) versehen ist, mit denen primäre zylindrische Gelenke (12) verbunden sind, deren Achsen im Wesentlichen parallel zueinander und orthogonal zur zentralen Achse (C) und zu einer Drehachse (Z) der Lenkstange (M) verlaufen; und
- eine zweite Gruppe (11), die mit der ersten Gruppe (10) verbunden ist und auf einer zweiten Liegeebene (P2) quer zu der ersten Liegeebene (P1) liegt, die mit sekundären Hebeln (11a, 11b) versehen ist, mit denen sekundäre zylindrische Gelenke (13) verbunden sind, deren Achsen im Wesentlichen parallel zu der zentralen Achse (C) verlaufen;
wobei eine der Gruppen, entweder die erste Gruppe (10) oder die zweite Gruppe (11), mit der Lenkstange (M) und die andere der Gruppen, entweder die erste Gruppe (10) oder die zweite Gruppe (11), mit dem Stützkörper (4) verbunden ist.

2. Vorrichtung (1) nach Anspruch 1, **dadurch gekennzeichnet, dass** die erste Gruppe (10) mit der Lenkstange (M) verbunden ist und die zweite Gruppe (11) mit dem Stützkörper (4) verbunden ist.

3. Vorrichtung (1) nach Anspruch 1 oder 2, **dadurch gekennzeichnet, dass** die erste Gruppe (10) von der Art eines Parallelogramm-Gelenkmechanismus ist und mindestens zwei der primären Hebel (10a, 10b) parallel nebeneinander umfasst.

4. Vorrichtung (1) nach Anspruch 1 oder 2, **dadurch gekennzeichnet, dass** die erste Gruppe (10) einen einzigen der primären Hebel (10c) umfasst.

5. Vorrichtung (1) nach einem oder mehreren der vorhergehenden Ansprüche, **dadurch gekennzeichnet, dass** die zweite Gruppe (11) von der Art eines Kniemechanismus ist und mindestens zwei der sekundären Hebel (11a, 11b) umfasst, die gelenkig miteinander verbunden sind und mit freien Enden versehen sind, die sich aufeinander zu/voneinander weg bewegen.

6. Vorrichtung (1) nach einem oder mehreren der vorhergehenden Ansprüche, **dadurch gekennzeichnet, dass** die Lenkeinheit (9) umfasst:
- mindestens einen Lenkstift (15), der zumindest teilweise in die zentrale Nabe (4a) eingesetzt ist und quer mit dem Haltestift (3) verbunden ist und die Lenkachse (S) definiert;
- mindestens ein Lager (16), das koaxial um den Lenkstift (15) herum angebracht und in Kontakt mit der zentralen Nabe (4a) um deren Umfang herum angeordnet ist; und
- Mittel zum Ausgleichen (17) des zwischen dem Lenkstift (15) und dem Lager (16) vorhandenen Spiels, die mit dem Lenkstift (15) und/oder dem Lager (16) verbunden sind.

7. Vorrichtung (1) nach Anspruch 6, **dadurch gekennzeichnet, dass** die Mittel zum Ausgleichen (17) Folgendes umfassen:
- mindestens ein elastisch komprimierbares Element (18), das so angeordnet ist, dass es an einer entsprechenden Anlagefläche (19) der zentralen Nabe (4a) anliegt, die sich an einem Ende des Lenkstifts (15) befindet, und das dazu ausgebildet ist, aufgrund seiner eigenen Kompression mindestens eine Kraft der gegenseitigen Annäherung auf den Lenkstift (15) und das Lager (16) auszuüben; und
- mindestens ein Einstellelement (20) zum Einstellen der Kompression des elastisch komprimierbaren Elements (18).

8. Vorrichtung (1) nach Anspruch 7, **gekennzeichnet durch** die Tatsache, dass das elastisch komprimierbare Element (18) vom Typ einer Tellerfeder ist.

9. Vorrichtung (1) nach einem oder mehreren der vorhergehenden Ansprüche, **dadurch gekennzeichnet, dass** die Aufhängungsmittel (2) mindestens einen Aufhängungsmechanismus (5, 6, 7) vom Typ Gelenkviereck umfassen, der mit dem Haltestift (3) verbunden ist und seinerseits umfasst:
- mindestens ein erstes Kurbelelement (5), das an dem Haltestift (3) und an dem Grundrahmen (T) angelenkt und gegenüber dem Grundrahmen (T) um mindestens eine erste Aufhängungsachse (Y1) drehbar ist;
- mindestens ein zweites Kurbelelement (6), das an dem Grundrahmen (T) angelenkt und in Bezug auf den Grundrahmen (T) um mindestens eine zweite Aufhängungsachse (Y2) drehbar ist, die im Wesentlichen parallel zu der ersten Aufhängungsachse (Y1) verläuft; und
- mindestens ein Verbindungsstangenelement (7), das im Wesentlichen parallel zur Lenkachse (S) angeordnet ist, zusammen mit dem Haltestift (3) verriegelt und an dem zweiten Kurbelelement (6) angelenkt ist.

10. Motorrad (100), umfassend:
- mindestens einen Grundrahmen (T);
- mindestens ein Vorderrad (A) und mindestens ein Hinterrad, die mit dem Grundrahmen (T) verbunden sind;
- mindestens eine Lenkstange (M), die um mindestens eine Drehachse (Z) drehbar ist und von einem Benutzer zum Lenken des Vorderrads (A) verwendet werden kann;
- mindestens eine Ausrichtvorrichtung (1), die mit dem Vorderrad (A) und der Lenkstange (M) in Wirkverbindung steht,
wobei die Ausrichtvorrichtung (1) umfasst:
- Aufhängungsmittel (2) des Vorderrads (A) des Motorrads (100), die beweglich mit dem Grundrahmen (T) des Motorrads (100) verbunden und mit mindestens einem Haltestift (3) versehen sind, der zumindest teilweise in das Vorderrad (A) einführbar ist und mindestens eine im Wesentlichen horizontale Rollachse (R) definiert;
- mindestens einen Stützkörper (4), der dazu ausgebildet ist, das Vorderrad (A) um eine zentrale Achse (C) drehbar zu lagern, und der mindestens eine zentrale Nabe (4a) umfasst, die den Haltestift (3) aufnimmt, wobei der Stützkörper (4) mit dem Haltestift (3) drehbar um eine Lenkachse (S) quer zur Rollachse (R) verbunden ist;
- mindestens eine Lenkeinheit (9), die mit dem Stützkörper (4) und einer Lenkstange (M) des Motorrads (100) verbunden ist, wobei die Lenkeinheit (9) dazu ausgebildet ist, die Drehung des Stützkörpers (4) um die Lenkachse (S) zu ermöglichen, und eine Mehrzahl von Hebeln (10, 11) umfasst, die auf kinematische Weise miteinander verbunden sind
wobei die Lenkeinheit (9) eine Mehrzahl von verbindenden zylindrischen Gelenken (12, 13) umfasst, wobei die Hebel (10, 11) mit dem Stützkörper (4), mit der Lenkstange (M) und miteinander durch Zwischenschaltung der zylindrischen Gelenke (12, 13) verbunden sind;
**dadurch gekennzeichnet, dass** die Hebel (10, 11) unterteilt sind in:
- eine erste Gruppe (10), die auf einer ersten Liegeebene (P1) liegt und mit primären Hebeln (10a, 10b, 10c) versehen ist, mit denen primäre zylindrische Gelenke (12) verbunden sind, deren Achsen im Wesentlichen parallel zueinander und orthogonal zur zentralen Achse (C) und zu einer Drehachse (Z) der Lenkstange (M) verlaufen; und
- eine zweite Gruppe (11), die mit der ersten Gruppe (10) verbunden ist und auf einer zweiten Liegeebene (P2) quer zu der ersten Liegeebene (P1) liegt, die mit sekundären Hebeln (11a, 11b) versehen ist, mit denen sekundäre zylindrische Gelenke (13) verbunden sind, deren Achsen im Wesentlichen parallel zu der zentralen Achse (C) verlaufen;
wobei eine der Gruppen, entweder die erste Gruppe (10) oder die zweite Gruppe (11), mit der Lenkstange (M) und die andere der Gruppen, entweder die erste Gruppe (10) oder die zweite Gruppe (11), mit dem Stützkörper (4) verbunden ist.

11. Motorrad (100) nach Anspruch 10, **dadurch gekennzeichnet, dass** die erste Gruppe (10) von der Art eines Parallelogramm-Gelenkmechanismus ist und mindestens zwei der primären Hebel (10a, 10b) parallel nebeneinander umfasst.

12. Motorrad (100) nach einem oder mehreren der vorhergehenden Ansprüche 10 bis 11, **dadurch gekennzeichnet, dass** die zweite Gruppe (11) vom Typ eines Kniemechanismus ist und mindestens zwei der sekundären Hebel (11a, 11b) umfasst, die gelenkig miteinander verbunden und mit freien Enden versehen sind, die sich aufeinander zu/voneinander weg bewegen.

13. Motorrad (100) nach einem oder mehreren der vorhergehenden Ansprüche 10 bis 12, **dadurch gekennzeichnet, dass** die Lenkeinheit (9) umfasst:
- mindestens einen Lenkstift (15), der zumindest teilweise in die zentrale Nabe (4a) eingesetzt ist und quer mit dem Haltestift (3) verbunden ist und die Lenkachse (S) definiert;
- mindestens ein Lager (16), das koaxial um den Lenkstift (15) herum angebracht und in Kontakt mit der zentralen Nabe (4a) um deren Umfang herum angeordnet ist; und
- Mittel zum Ausgleichen (17) des Spiels, das zwischen dem Lenkstift (15) und dem Lager (16) vorhanden ist, die mit dem Lenkstift (15) und/oder dem Lager (16) verbunden sind.

14. Motorrad (100) nach Anspruch 13, **dadurch gekennzeichnet, dass** die Mittel zum Ausgleichen (17) Folgendes umfassen:
- mindestens ein elastisch komprimierbares Element (18), das so angeordnet ist, dass es an einer jeweiligen Anlagefläche (19) der zentralen Nabe (4a) anliegt, die sich an einem Ende des Lenkstifts (15) befindet, und das dazu ausgebildet ist, aufgrund seiner eigenen Kompression mindestens eine Kraft der gegenseitigen Annäherung auf den Lenkstift (15) und das Lager (16) zu übertragen; und
- mindestens ein Einstellelement (20) zum Einstellen der Kompression des elastisch komprimierbaren Elements (18).

15. Motorrad (100) (1) nach einem oder mehreren der vorhergehenden Ansprüche 10 bis 14, **dadurch gekennzeichnet, dass** die Aufhängungsmittel (2) mindestens einen Aufhängungsmechanismus (5, 6, 7) vom Gelenkviereck-Typ umfassen, der mit dem Haltestift (3) verbunden ist und seinerseits umfasst:
- mindestens ein erstes Kurbelelement (5), das an dem Haltestift (3) und an dem Grundrahmen (T) angelenkt ist und gegenüber dem Grundrahmen (T) um - mindestens eine erste Aufhängungsachse (Y1) drehbar ist;
- mindestens ein zweites Kurbelelement (6), das an dem Grundrahmen (T) angelenkt und in Bezug auf den Grundrahmen (T) um mindestens eine zweite Aufhängungsachse (Y2) drehbar ist, die im Wesentlichen parallel zu der ersten Aufhängungsachse (Y1) verläuft; und
- mindestens ein Verbindungsstangenelement (7), das im Wesentlichen parallel zur Lenkachse (S) angeordnet, zusammen mit dem Haltestift (3) verriegelt und an dem zweiten Kurbelelement (6) angelenkt ist.

## Revendications

1. - Dispositif d'orientation (1) de la roue avant directrice de motocyclettes, comprenant :
- des moyens de suspension (2) d'une roue avant (A) d'une motocyclette (100) associés à un cadre de base (T) de ladite motocyclette (100) d'une manière mobile et comportant au moins une goupille de maintien (3) apte à être introduite, au moins en partie, à l'intérieur de ladite roue avant (A) et définissant au moins un axe de roulement (R) sensiblement horizontal ;
- au moins un corps de support (4) apte à porter ladite roue avant (A) en rotation autour d'un axe central (C) et comprenant au moins un moyeu central (4a) logeant ladite goupille de maintien (3), ledit corps de support (4) étant associé à ladite goupille de maintien (3) d'une manière rotative autour d'un axe de direction (S) transversal audit axe de roulement (R) ;
- au moins une unité de direction (9), reliée audit corps de support (4) et à un guidon (M) de ladite motocyclette (100), ladite unité de direction (9) étant apte à permettre la rotation dudit corps de support (4) autour dudit axe de direction (S) et comprenant une pluralité de leviers (10, 11) reliés entre eux d'une manière cinématique ;
dans lequel ladite unité de direction (9) comprend une pluralité de raccords cylindriques de liaison (12, 13), lesdits leviers (10, 11) étant reliés audit corps de support (4), audit guidon (M) et les uns aux autres par interposition desdites raccords cylindriques (12, 13) ;
**caractérisé par le fait que** lesdits leviers (10, 11) sont divisés en :
- un premier groupe (10), s'étendant sur un premier plan d'extension (P1), qui comporte des leviers primaires (10a, 10b, 10c) auxquels sont reliés des raccords cylindriques primaires (12) ayant des axes sensiblement parallèles entre eux et orthogonaux audit axe central (C) et à un axe de rotation (Z) dudit guidon (M) ; et
- un second groupe (11), relié audit premier groupe (10) et s'étendant sur un second plan d'extension (P2) transversal audit premier plan d'extension (P1), qui comporte des leviers secondaires (11a, 11b) auxquels sont reliés des raccords cylindriques secondaires (13) ayant des axes sensiblement parallèles audit axe central (C) ;
dans lequel l'un soit dudit premier groupe (10), soit dudit second groupe (11) est relié audit guidon (M) et l'autre soit dudit premier groupe (10), soit dudit second groupe (11) est relié audit corps de support (4).

2. - Dispositif (1) selon la revendication 1, **caractérisé par le fait que** ledit premier groupe (10) est relié audit guidon (M) et ledit second groupe (11) est relié audit corps de support (4).

3. - Dispositif (1) selon la revendication 1 ou 2, **caractérisé par le fait que** ledit premier groupe (10) est du type d'un mécanisme à parallélogramme articulé et comprend au moins deux desdits leviers primaires (10a, 10b) parallèles entre eux côte à côte.

4. - Dispositif (1) selon la revendication 1 ou 2, **caractérisé par le fait que** ledit premier groupe (10) comprend un seul levier primaire précité (10c).

5. - Dispositif (1) selon l'une ou plusieurs des revendications précédentes, **caractérisé par le fait que** ledit second groupe (11) est du type d'un mécanisme à genouillère et comprend au moins deux desdits leviers secondaires (11a, 11b) articulés l'un à l'autre et comportant des extrémités libres qui se rapprochent/s'éloignent l'une de l'autre.

6. - Dispositif (1) selon l'une ou plusieurs des revendications précédentes, **caractérisé par le fait que** ladite unité de direction (9) comprend :
- au moins un pivot de direction (15), encastré au moins en partie dans ledit moyeu central (4a) et associé transversalement à ladite goupille de maintien (3), définissant ledit axe de direction (S) ;
- au moins un palier (16) monté coaxialement autour dudit pivot de direction (15) et disposé en contact avec ledit moyeu central (4a) autour du périmètre de celui-ci ; et
- des moyens de compensation (17) des jeux présents entre ledit pivot de direction (15) et ledit palier (16) associés à au moins l'un soit dudit pivot de direction (15), soit dudit palier (16).

7. - Dispositif (1) selon la revendication 6, **caractérisé par le fait que** lesdits moyens de compensation (17) comprennent :
- au moins un élément élastiquement compressible (18) qui est agencé pour reposer sur une surface d'appui respective (19) dudit moyeu central (4a) situé à une extrémité dudit pivot de direction (15) et qui est apte à conférer, du fait de sa propre compression, au moins une force d'approche mutuelle audit pivot de direction (15) et audit palier (16) ; et
- au moins un élément de réglage (20) pour régler la compression dudit élément élastiquement compressible (18).

8. - Dispositif (1) selon la revendication 7, **caractérisé par le fait que** ledit élément élastiquement compressible (18) est du type d'un ressort à disque.

9. - Dispositif (1) selon l'une ou plusieurs des revendications précédentes, **caractérisé par le fait que** lesdits moyens de suspension (2) comprennent au moins un mécanisme de suspension (5, 6, 7) du type quadrilatère articulé associé à ladite goupille de maintien (3) et comprenant à son tour :
- au moins un premier élément manivelle (5) articulé à ladite goupille de maintien (3) et audit cadre de base (T) et rotatif par rapport audit cadre de base (T) autour d'au moins un premier axe de suspension (Y1) ;
- au moins un second élément manivelle (6) articulé audit cadre de base (T) et rotatif par rapport audit cadre de base (T) autour d'au moins un second axe de suspension (Y2) sensiblement parallèle audit premier axe de suspension (Y1) ; et
- au moins un élément tige de liaison (7) disposé sensiblement parallèlement audit axe de direction (S), verrouillé conjointement avec ladite goupille de maintien (3) et articulé audit second élément manivelle (6).

10. - Motocyclette (100), comprenant :
- au moins un cadre de base (T) ;
- au moins une roue avant (A) et au moins une roue arrière associées audit cadre de base (T) ;
- au moins un guidon (M) rotatif autour d'au moins un axe de rotation (Z) et utilisable par un utilisateur pour diriger ladite roue avant (A) ;
- au moins un dispositif d'orientation (1) associé fonctionnellement à ladite roue avant (A) et audit guidon (M),
dans laquelle ledit dispositif d'orientation (1) comprend :
- des moyens de suspension (2) de ladite roue avant (A) de ladite motocyclette (100) associés audit cadre de base (T) de ladite motocyclette (100) d'une manière mobile et comportant au moins une goupille de maintien (3) apte à être introduite, au moins en partie, à l'intérieur de ladite roue avant (A) et définissant au moins un axe de roulement (R) sensiblement horizontal ;
- au moins un corps de support (4) apte à porter ladite roue avant (A) en rotation autour d'un axe central (C) et comprenant au moins un moyeu central (4a) logeant ladite goupille de maintien (3), ledit corps de support (4) étant associé à ladite goupille de maintien (3) d'une manière rotative autour d'un axe de direction (S) transversal audit axe de roulement (R) ;
- au moins une unité de direction (9), reliée audit corps de support (4) et à un guidon (M) de ladite motocyclette (100), ladite unité de direction (9) étant apte à permettre la rotation dudit corps de support (4) autour dudit axe de direction (S) et comprenant une pluralité de leviers (10, 11) reliés entre eux d'une manière cinématique ;
dans laquelle ladite unité de direction (9) comprend une pluralité de raccords cylindriques de liaison (12, 13), lesdits leviers (10, 11) étant reliés audit corps de support (4), audit guidon (M) et les uns aux autres par interposition desdits raccords cylindriques (12, 13) ;
**caractérisée par le fait que** lesdits leviers (10, 11) sont divisés en :
- un premier groupe (10), s'étendant sur un premier plan d'extension (P1), qui comporte des leviers primaires (10a, 10b, 10c) auxquels sont reliés des raccords cylindriques primaires (12) ayant des axes sensiblement parallèles entre eux et orthogonaux audit axe central (C) et à un axe de rotation (Z) dudit guidon (M) ; et
- un second groupe (11), relié audit premier groupe (10) et s'étendant sur un second plan d'extension (P2) transversal audit premier plan d'extension (P1), qui comporte des leviers secondaires (11a, 11b) auxquels sont reliés des raccords cylindriques secondaires (13) ayant des axes sensiblement parallèles audit axe central (C) ;
dans laquelle l'un soit dudit premier groupe (10), soit dudit second groupe (11) est relié audit guidon (M) et l'autre soit dudit premier groupe (10), soit dudit second groupe (11) est relié audit corps de support (4).

11. - Motocyclette (100) selon la revendication 10, **caractérisée par le fait que** ledit premier groupe (10) est du type d'un mécanisme à parallélogramme articulé et comprend au moins deux desdits leviers primaires (10a, 10b) parallèles entre eux côte à côte.

12. - Motocyclette (100) selon l'une ou plusieurs des revendications précédentes 10 et 11, **caractérisée par le fait que** ledit second groupe (11) est du type d'un mécanisme à genouillère et comprend au moins deux desdits leviers secondaires (11a, 11b) articulés l'un à l'autre et comportant des extrémités libres qui se rapprochent/s'éloignent l'une de l'autre.

13. - Motocyclette (100) selon l'une ou plusieurs des revendications précédentes 10 à 12, **caractérisée par le fait que** ladite unité de direction (9) comprend :
- au moins un pivot de direction (15), encastré au moins en partie dans ledit moyeu central (4a) et associé transversalement à ladite goupille de maintien (3), définissant ledit axe de direction (S) ;
- au moins un palier (16) monté coaxialement autour dudit pivot de direction (15) et disposé en contact avec ledit moyeu central (4a) autour du périmètre de celui-ci ; et
- des moyens de compensation (17) des jeux présents entre ledit pivot de direction (15) et ledit palier (16) associés à au moins l'un soit dudit pivot de direction (15), soit dudit palier (16).

14. - Motocyclette (100) selon la revendication 13, **caractérisée par le fait que** lesdits moyens de compensation (17) comprennent :
- au moins un élément élastiquement compressible (18) qui est agencé pour reposer sur une surface d'appui respective (19) dudit moyeu central (4a) situé à une extrémité dudit pivot de direction (15) et qui est apte à conférer, du fait de sa propre compression, au moins une force d'approche mutuelle audit pivot de direction (15) et audit palier (16) ; et
- au moins un élément de réglage (20) pour régler la compression dudit élément élastiquement compressible (18).

15. - Motocyclette (100) selon l'une ou plusieurs des revendications précédentes 10 à 14, **caractérisée par le fait que** lesdits moyens de suspension (2) comprennent au moins un mécanisme de suspension (5, 6, 7) du type quadrilatère articulé associé à ladite goupille de maintien (3) et comprenant à son tour :
- au moins un premier élément manivelle (5) articulé à ladite goupille de maintien (3) et audit cadre de base (T) et rotatif par rapport audit cadre de base (T) autour d'au moins un premier axe de suspension (Y1) ;
- au moins un second élément manivelle (6) articulé audit cadre de base (T) et rotatif par rapport audit cadre de base (T) autour d'au moins un second axe de suspension (Y2) sensiblement parallèle audit premier axe de suspension (Y1) ; et
- au moins un élément tige de liaison (7) disposé sensiblement parallèlement audit axe de direction (S), verrouillé conjointement avec ladite goupille de maintien (3) et articulé audit second élément manivelle (6).
